# EUROPEAN PATENT APPLICATION

(11) **EP 2 429 064 A2**
(43) Date of publication of application: **14.03.2012**
(21) Application number: 11250789.2
(22) Date of filing: 12.09.2011
(51) Int. Cl.: H02K 1/18, H02K 17/42, H02K 1/14, H02K 16/02, H02K 17/16

(54) **Asynchronous electrical machine**

(30) Priority: 14.09.2010 GB 1015375
(71) Applicant: EC Power A/S, 8382 Hinnerup (DK)
(72) Inventor: Førster, Jesper, 8382 Hinnerup (DK)
(74) Representative: Taylor, Adam David

(57) **Abstract**

An asynchronous electrical machine for a combined heat and power device comprises: a first induction element (2), a second induction element (4) and a coil element (3), wherein the first and second induction elements (2,4) and the coil element (3) are mounted along an axis of rotation of the machine and are axially spaced from one another, wherein the machine provides for relative rotational movement between the coil element (3) and the induction elements (2,4) and wherein the coil element (3) is located on the axis between the two induction elements (2,4) and separated from them by axial air gaps.

## Description

The invention relates to an asynchronous electrical machine.

An electrical machine is a motor, which converts electrical power to mechanical power, or a generator, which uses relative motion of electrical and magnetic components to generate electricity. An asynchronous electrical machine such as an induction generator or induction motor uses or produces single or multiphase electricity. Induction generators are not self-exciting, instead they require an external electricity supply to produce a rotating magnetic flux, typically by means of coils. This electricity can be supplied from an external source at all times, or it can be supplied from an external source upon start-up and then later from the generator itself. The rotating magnetic flux from the coils induces currents in the induction elements of the machine, which may be an induction cage such as a squirrel cage type construction. The induced currents in the induction elements also produce a magnetic field. If the relative rotational movement of the coil element and the induction element is slower than the rate of the rotating flux, the machine acts like an induction motor. If the rotational movement is faster, the machine acts like a generator, producing power at the synchronous frequency.

Typically, since the coil element requires electrical power it is used as the stator, whereas the induction elements, which use only induced current, are generally used as the rotor.

A generator requires mechanical energy from a prime mover. Typically, a generator assembly will use rotational energy supplied by a prime mover such as an engine or turbine. Mechanical energy from the prime mover is converted into electrical energy by movement of a rotor relative to a stator. With these devices, it is necessary to mount the generator assembly to the prime mover in such a way that the mechanical energy is effectively transferred from the prime mover to the rotor of the generator assembly.

An example of an engine generator machine is a combined heat and power (CHP) device. A CHP device can be made up of a generator assembly and a prime mover such as an internal combustion engine. The internal combustion engine is fitted with heat exchangers and the like for recovery of heat. A generator is used to convert the mechanical energy produced by the engine into electricity.

In a prior art arrangement of this type, the rotor of an asynchronous generator is mounted on a shaft with bearings at each end and coupled to the crankshaft of the engine via a clutch. The rotor and stator of the asynchronous generator can be aligned in a conventional manner with the bearings, and the clutch permits transfer of mechanical energy between the rotor shaft and the crankshaft. However, this arrangement is bulky and mechanically inefficient. In addition, the clutch requires maintenance leading to increased running costs.

An existing improved arrangement omits the clutch and couples the rotor to the crankshaft with no intervening moving parts. A shaft extends out of the asynchronous generator to join the rotor to the crankshaft. This saves space as well as reducing the number of moving parts. However, because it is not possible to easily align a bearing with the crankshaft, this arrangement has to use a 'flying rotor', i.e. a rotor supported on the crankshaft in cantilever fashion, which leads to problems when aligning the rotor and the crankshaft with the stator. The alignment of the stator and rotor with the crankshaft is crucial. For efficient generation of electricity the air gap between the rotor and the stator should be minimised. When the nominal air gap has to be increased to allow for possible small misalignments then the performance of the combined heat and power device will be compromised. Moreover, during start-up or rotation of the rotor any misalignment will produce large magnetic forces, which will give rise to a bending force on the crankshaft where the rotor is mounted. This can result in damage to the device should the rotor and stator come into contact during start-up. Misalignment will also produce vibrations and reduce efficiency.

To ensure the required degree of alignment the stator casing in the known arrangement utilises a flange that is mounted to the engine prior to mounting the rotor and stator. The flange is mounted using existing mounting points on the engine casing and bolts passing through the flange toward the engine casing. The existing mounting points of the engine would, in other applications, typically be used to mount a clutch and/or gearbox to the engine via a bell housing. The rotor is mounted on the crankshaft and both the rotor and the flange are carefully aligned with the crankshaft and with each other. The stator and the stator casing are then fixed to the flange by means of bolts passing through the flange away from the engine. As the rotor and the flange are aligned with each other and with the crankshaft, the stator can be aligned with the rotor and crankshaft with sufficient accuracy for effective generation of electricity.

Although this known arrangement provides numerous advantages, there are also some problems. Some degree of misalignment can still arise and because the rotor is separated from the mounting point on the crankshaft by the length of the shaft passing through the flange, the effect of any misalignment is magnified. As a consequence of allowing for the possible misalignment the nominal air gap between rotor and stator is larger than the air gap in generators with bearing mounted rotors.

In the present invention, viewed from a first aspect, an asynchronous electrical machine is provided that comprises: a first induction element, a second induction element and a coil element, wherein the induction elements and coil element are mounted along an axis of rotation of the machine and are axially spaced from one another, wherein the machine provides for relative rotational movement between the coil element and the induction elements and wherein the coil element is located on the axis between the two induction elements.

The coil element may be the stationary part of the machine, and hence form the stator, with the induction elements being the rotors of the machine. This is the preferred arrangement since it permits straightforward electrical connection of the coil and hence the discussion below focuses on this arrangement. However, it should be understood that the invention is not limited to this arrangement and includes the reverse configuration, where the coil element is rotatable and hence forms the rotor, with the induction elements being stationary. What is required to produce the advantageous effects of this layout is relative rotational movement between the coil element and the induction elements, with the coil element between the two induction elements. This movement induces electromagnetic fields and currents in the coil and induction elements, and hence results in the conversion of mechanical power to electrical power (or vice versa). The air gap between the coil element and induction elements in the present arrangement is perpendicular to the axis of rotation and hence flux passes across the air gap parallel to the axis of rotation of the machine. This is to be contrasted with conventional asynchronous electrical machines that typically utilise an air gap parallel to the axis, between a cylindrical rotor and a stator around the outer surface of the rotor, and hence have flux paths perpendicular to the axis of rotation. With the present arrangement, the flux paths extend axially within the electrical machine, from the first induction elements to the second induction elements through the coils of the coil element. The coil element provides an induced magnetic field with its north and south poles arranged along a line parallel to the axis of rotation of the machine.

The electrical machine of the invention can be used as an asynchronous generator that operates by means of axial flux. Hence, preferably, the electrical machine is a generator, although as will be appreciated it could also be utilised as a motor. When the electrical machine is used as a generator in an engine-generator then the machine may advantageously be operated as a starter motor for the engine.

The induction elements and coil element are preferably generally circular, more preferably they are generally disc shaped.

This dual induction element axial flux arrangement is of particular benefit when utilised as a generator attached to the output shaft of a prime mover. Preferred embodiments hence take the form of generators for connection to an output shaft of a prime mover.

With the prior art radial flux devices the radial alignment of the rotor with the stator and the radial play of the output shaft of the prime mover creates problems and means that the nominal stator-rotor air gap for such machines must be increased, as discussed above. Correct alignment of the stator and rotor, which may have different mounting points on the prime mover, could be difficult. Also, the output shafts of prime movers such as internal combustion engines can have a relatively high degree of radial play. In a radial flux device the clearance between the rotor and stator has to be increased to allow for this radial play, and also to allow for radial movement arising from bending of the rotor shaft when a flying (cantilevered) rotor is used.

With the present arrangement, the radial alignment and radial play is no longer significant. Instead, the induction element-coil element (rotor-stator) air gap is formed axially. Since the axial play of the output shaft for typical prime movers is less than the radial play, a smaller nominal air gap can be used. The bending movement of a flying rotor has no significant effect on the air gap since this does not create any appreciable axial movement of the rotor relative to the stator. Ease of manufacture is therefore greatly improved.

The stator may comprise a plurality of stator coils, which are preferably entirely contained within the flux path of the electrical machine. The coils may be arranged in a circle about the axis of rotation of the machine, which is a closed circle in the preferred embodiments, forming a closed stator. Preferably, the coils are wound about an axis parallel to the axis of rotation of the machine. The coils may be coils wound directly onto a coil body, which is a stator body in the preferred embodiment. The coil body may be a lamination and may include a generally cylindrical portion for supporting the coil. The cylinder may have an oval cross-section. This simple arrangement is made possible by the axial flux nature of the electrical machine. Since the coils may be simple windings a high efficiency can be produced, as it is easy to tightly wind such coils, with minimal gaps between coils and hence minimal losses.

All parts of the coils are utilised in the magnetic circuits formed during operation of the machine. There are no wasteful winding heads. This further improves the efficiency. In conventional electrical machines, the winding heads can account for up to 30% of the winding losses. In addition, the ability to have tightly wound coils and no winding heads greatly reduces the amount of copper (or equivalent wire, e.g. aluminium) that is required, which makes the electrical machine cheaper and lighter.

Typically, the coils will be copper or aluminium and the coil element body may be one or more steel laminations holding the coils. Since the coil element is formed as a circular component to be placed between two circular induction elements, rather than a coil arrangement encasing a cylindrical rotor, the coil element body in the axial flux machine is smaller than the stator body in a conventional radial flux machine. Hence, it is lighter and it can be made using less material, which is advantageous since the specialised steel that is typically used for stator laminations can be expensive.

The electrical machine may, in use, comprise a flux path extending out of a coil, radially through a portion of the first induction element to the axis, along a shaft or axle of the induction element, radially through a portion of the second induction element and returning to the coil. This is an efficient flux path and it forms a complete loop from a single coil using the two ends of the coil to form as north and south poles of the induced magnetic field.

In preferred embodiments the machine comprises a central shaft or shafts, which preferably pass between the induction elements and may hence pass though a centre of the coil element. The coil element may rotate about the shaft(s), although in the preferred embodiment described herein the coil element is the stator and the induction elements are rotors that are supported by and rotate with the shaft(s).

Preferably, the shaft or shafts of the machine promote an effective flux path along the shaft. In a preferred embodiment the diameter of the shaft or shafts between the induction elements exceeds the diameter required for mechanical support of the induction elements. With an increased diameter the distance between the material of the shaft and the coil is minimised, which hence shortens the flux path. Also, the increased diameter may provide a greater cross-sectional area for the flux path to travel along. Conventional electrical machines have shafts with a small diameter since the shaft is intended merely for mechanical support of the induction elements. The material of the shaft in conventional arrangements is not close enough to the coil to provide an efficient flux path. Hence, machines with these shafts will not support a flux path along the shaft axis.

The shaft(s) may advantageously be hollow along at least a part of the shaft length, for example the shaft(s) may be cylindrical tube shaped shaft(s), preferably with a circular cross-section. This allows the diameter of the shaft to be increased without using excessive amounts of additional material and without giving rise to an excessive increase in the mass of the shaft. A hollow shaft also provides advantages during production and manufacture. The opening through the shaft can be used to align the shaft with its mounting point, which may be an output shaft of an engine. Also, the opening can provide access for fixings such as bolts that may be used to join the shaft to its mounting point. The shaft(s) may be hollow all the way along the length of the shaft(s). Alternatively, depending on the nature of the coupling between the shaft and its mounting point the shaft may be closed at one end to provide a mounting plate or similar.

In preferred embodiments the diameter of the shaft or shafts between the induction elements is at least 20% of the diameter of the active part of the induction element, preferably at least 30% of that diameter. As explained above, the larger diameter improves the effectiveness of the flux path through the shaft. The shaft diameter is in principle limited only by the space required by the coils, but would typically be no more than 60% of the diameter of the active part of the induction element. In the preferred arrangement the shaft is hollow as discussed above and in this case the opening in the hollow shaft may have a diameter of between 20% and 50% of the shaft diameter, for example about 30% of the shaft diameter.

The active part of the induction element is the part of the induction element in electromagnetic relationship with the coil element. For a squirrel cage type induction element the diameter of the outer short circuit ring will be the diameter of the active part of the induction element.

The largest possible diameter for the shaft or shafts between the induction elements will place the material of the shaft closest to the coils and will give rise to the most effective flux path along the shaft axis. The largest possible diameter would extend the circumference of the shaft(s) out toward the coil element until the point where the shaft(s) and coil element might impede one another. In practice, windage losses from close proximity of the shaft(s) and coil element should also be taken into account so that the actual diameter is slightly smaller than an absolute maximum. Also, there may be a compromise between the additional material required for the shaft and the additional mass of the shaft and the gains made from increasing the diameter of the shaft(s).

The electrical machine may, in use, comprise a flux path extending out of a first coil, circumferentially around the first induction element, through an adjacent coil to the second induction element, and circumferentially around the second induction element to return to the first coil. Preferably there are flux paths both passing along the shaft axis and also via adjacent coils. The flux paths may of course repeat for each of multiple coils of the coil element.

In one possible arrangement, the coil element comprises six coils placed about the axis of the machine. Thus, a four pole electrical machine can be formed. In an alternative arrangement there may be three coils placed about the axis of the machine. This hence forms a two pole machine. The use of a flux path passing through the shaft of the machine, as described above, is of particular advantage for such a three coil two pole machine, since the other potential flux path, passing via adjacent coils, is made less efficient due to the increased spacing of the coils in a three coil machine. Also, a larger number of coils may be used.

The coils are preferably arranged for production of a three phase current, and may be connected in a Y or delta arrangement in a similar manner to known coil connections in radial flux electrical machines. Since the axial flux electrical machine disclosed herein is in many respects electrically similar to a conventional asynchronous electrical machine, despite being quite different in structure, conventional techniques and arrangements can be used when connecting the windings.

The electrical machine may include a casing to support the stator. As noted above, the stator may be the coil element or the induction elements, and the stator is preferably the coil element. In a preferred embodiment, where the electrical machine is a generator for connection to a prime mover such as an engine the stator casing includes one or more fixing(s) arranged to be coupled with one or more pre-existing mounting point(s) on the engine, preferably at least two fixings arranged to be coupled with at least two mounting points, whereby the mounting points can be used to align the stator casing with the output shaft. Hence, the stator casing may have one or more fixings such as holes, bolts, pins or the like, the fixing(s) being placed for connection to the mounting points on the engine. Engines are typically supplied with mounting points for fixing a clutch or gearbox to the engine via a bell housing. The stator casing may surround the rotor(s).

In preferred embodiments, the electrical machine is a generator for connection to an output shaft of a prime mover and the rotors are arranged for cantilevered connection to the output shaft. The connection of the rotors to the output shaft is preferably a direct connection, without intervening clutch or similar. In a most preferred embodiments, one of the rotors is arranged to be directly connected to the output shaft via an integral shaft of the rotor. Preferably one of the rotors includes a hole or a boss for complementary fit with a boss or hole of the output shaft for aligning the rotor with the output shaft.

The induction elements may comprise disc-shaped rotors with a squirrel cage type construction. That is to say, the induction elements may be formed with a similar structure to a conventional squirrel cage rotor (for a radial flux machine), but with a reduced axial length. Thus, the induction elements may comprise an inner short circuit ring, an outer short circuit ring, and rotor induction bars extending between the two rings.

The induction elements, which preferably are rotor(s) are preferably cast integrally with a shaft, which may be hollow as discussed above. This shaft may form a part of the shaft that connects to the prime mover in cantilevered fashion. In a preferred arrangement, the first and second induction elements are first and second rotors of identical construction and each include an integral shaft. The shaft of the first rotor may be for connection at one end to an output shaft of a prime mover, preferably a direct connection. The shaft of the second rotor may be for connection to an end of the shaft of the first rotor. The stator (coil element) may be mounted about the shaft of one or both of the rotor(s). In an alternative arrangement the two rotors and shaft may be formed as a single part, for example by forming a single casting around two squirrel cage rotor elements. The flux path along the shaft axis is improved when the rotor(s) and shaft are cast integrally with one another, since there is no transition between parts and different materials that might otherwise restrict the flux path between the shaft and the rotor.

An additional advantage of the electrical machine is that the preferably direct coupling of the rotor part to the output shaft allows heat from the rotor to be conducted to the output shaft of the engine. In a combined heat and power device arrangements will be in place to remove heat from the engine, and hence the rotor can be cooled indirectly via the output shaft and the conductive coupling.

In a preferred arrangement, a CHP device includes an electrical machine as described above and the combined heat and power device is arranged such that heat is removed from the rotor via conduction of heat from a shaft of the rotor into the output shaft of the engine.

It should be noted that whilst, in the preferred embodiment, the electrical machine discussed above is utilised in conjunction with an internal combustion engine as part of a CHP device, the advantages of the electrical machine are not limited to such applications. Hence the electrical machine can be used in any engine-generator where the rotor can be directly connected to the output shaft of the prime mover, or alternatively it may find use as a motor.

Viewed from a second aspect, the invention provides a method of manufacturing an electrical machine, the method comprising: providing a first induction element, a second induction element and a coil element, wherein the first and second induction elements and coil element are mounted along an axis of rotation of the machine and are axially spaced from one another, wherein the machine provides for relative rotational movement between the coil element and the induction elements and wherein the coil element is located between the two induction elements.

The method of the invention may comprise providing features of the electrical machine as discussed above.

The electrical machine may be a generator for mounting to an output shaft of a prime mover. In this instance, the method may comprise mounting a rotor directly to the output shaft. In the preferred arrangement where the induction elements are the moving parts, they preferably form two rotors joined by a shaft, and the stator (coil element) is preferably mounted about the shaft between the two rotors. The shaft may be formed of shafts extending from one or both of the rotor(s). A single bolt or set of bolts may be used to join both of the two rotors to the output shaft, i.e. with the bolt(s) passing through both rotor shafts.

A stator casing supporting the stator may be mounted to a casing of the prime mover. The stator casing may be mounted to the engine by coupling one or more fixing(s) on the stator casing to one or more pre-existing mounting point(s) on the engine, preferably by coupling at least two fixings to at least two such mounting points, in order to thereby align the stator casing with the output shaft. The rotors may have integrally formed shafts for mounting purposes and to improve the effectiveness of a flux path passing along the shaft.

A preferred method comprises forming the rotors by casting. Preferably, the casting process is used to form shafts integrally with the rotors, or to form two rotors and a common shaft. The shaft and induction cage for the rotor may be cast in one piece. Since the rotor experiences relatively low frequencies, a cast rotor can be used without any disadvantage. It may alternatively be possible to form the rotor from lamination, but the benefit from doing so is thought to be insignificant.

Certain preferred embodiments of the invention will now be described by way of example only and with reference to the accompanying drawings, in which:
Figure 1 is a perspective view of an embodiment of an electrical machine in exploded view, arranged as a generator for connection to an internal combustion engine;
Figure 2 shows a side view of the electrical machine of Figure 1 when assembled and mounted on the engine;
Figure 3 is a cross-section through the electrical machine and parts of the engine;
Figures 4A to 4C are front, side and perspective views of a rotor;
Figure 5 is a simplified illustration of the arrangement of the stator coils;
Figure 6 is a schematic diagram of a cross-section through one side of an electrical machine showing a first flux path; and
Figure 7 is a schematic diagram showing a side view of an electrical machine and a second flux path.

The electrical machine of the invention is shown, by way of example only, in the context of an engine-generator, wherein the coil element is the stationary part (stator) and the induction elements are the rotating parts (rotors). A generator includes an engine or prime mover for producing mechanical energy and a generator for converting the mechanical energy into electrical energy. When the engine-generator is a CHP unit, as shown in the example embodiments, there are additional components that extract heat from the engine. The exemplary electrical machine, when operating as a generator, outputs 20 kW and runs at around 1500 rpm. This machine is hence well suited to use in a CHP device powered by an internal combustion engine.

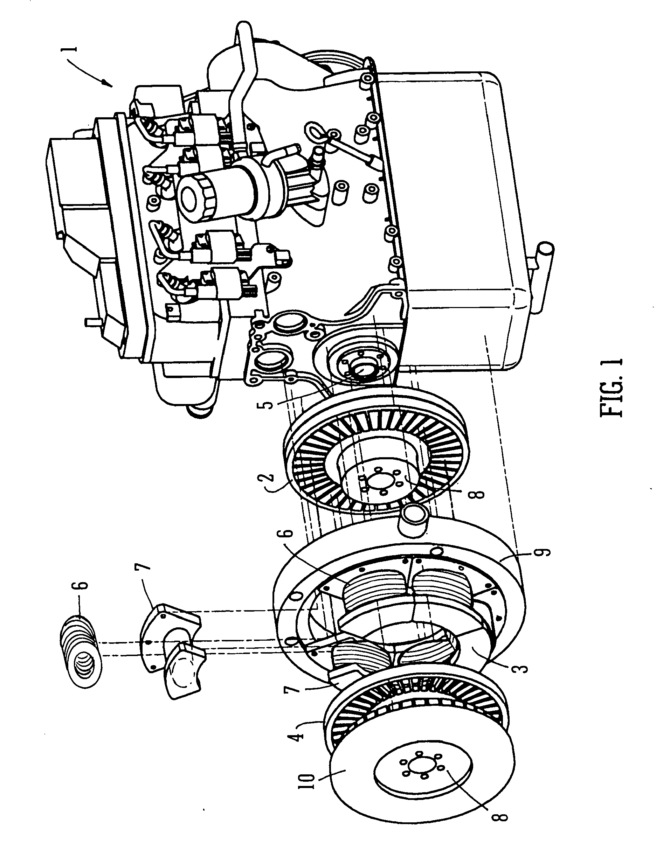

In Figure 1 the engine 1 is of a known type and includes a known arrangement (not shown) for extracting heat produced by the engine 1. Typically, the heat will be used in a space and/or water heating system that includes a heat storage device. The engine 1 and heat transfer arrangements may, for example, be similar to that utilised in the "XRGI 15" or "XRGI 17" combined heat and power units produced by EC Power AS of Denmark.

The electrical machine comprises a first rotor 2, a stator 3, and a second rotor 4. The first and second rotors are induction elements and are mounted on an axis of rotation that coincides with the axis of rotation of an output shaft 5 of the engine 1. The stator 3 is a coil element and sits between the two rotors 2, 4. It is formed of a number of coils 6. One coil is illustrated detached from the remaining five coils to show the simple construction of the stator 3. Each coil 6 is simply wound onto a stator body 7, which is made of an appropriate laminated steel. Each coil 6 and stator body 7 is of the same shape and construction, and the stator bodies 7 assemble together as segments of a circle to produce a circular stator 3 which sits between and is entirely surrounded on each side by the rotors 2, 4. In this embodiment there are six coils, but it will be appreciated that other numbers of coils could be used, in arrangements analogous to the coil arrangements for conventional asynchronous machines. For example, the axial flux design of this machine would be well suited to a three coil two pole device, since the use of a flux path through the shaft provides a significant advantage in view of the increased spacing of the coils in a three coil device.

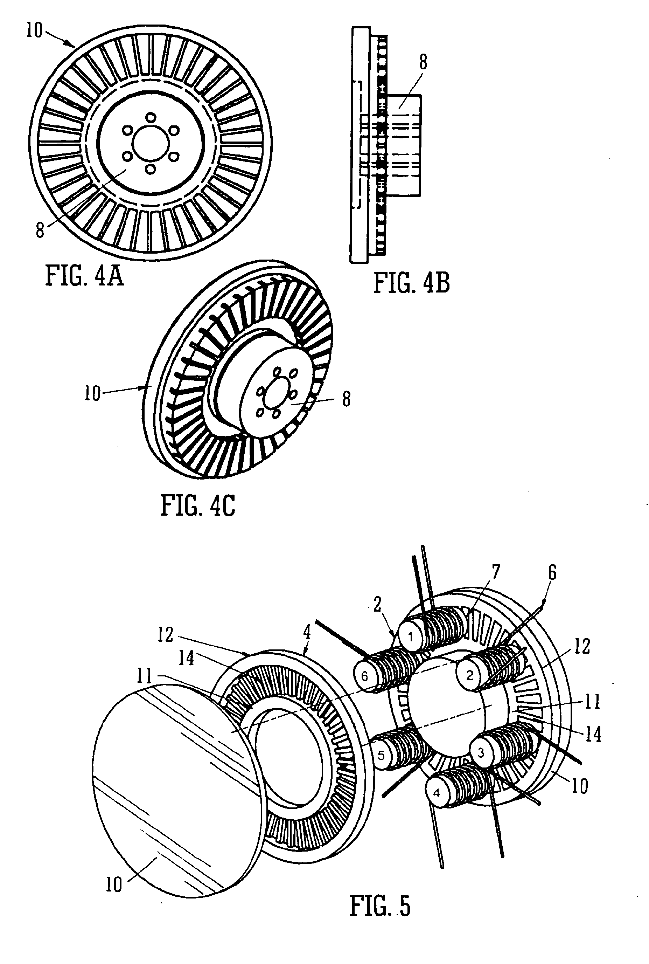

Each rotor 2, 4 includes a shaft 8. The rotors 2, 4 are of generally similar construction, as explained below in relation to Figures 4A to 4C. The shaft 8 of the first rotor 2 is connected at one end to the input/output shaft for the electrical machine, which in the embodiment of Figure 1 is the output shaft 5 of the engine. The other end of that shaft connects to the second rotor 4. The stator 3 is mounted about the shafts 8 between the two rotors 2, 4. The stator bodies 7 are mounted on a stator casing 9, which serves to support the stator bodies 7. In this preferred embodiment, where the electrical machine is a generator attached to an engine 1, the stator casing 9 is providing with fittings arranged for direct connection to the body of the engine. The stator casing 9 fits over the first rotor 2, but does not connect with it. A cover/shield (not shown) enclosing the moving parts and electrical components completes the main parts of the device.

The shafts 8 are hollow and are cast integrally with the rotors 2, 4 as explained below. The diameter of the shaft 8 is larger than that of conventional shafts. In the preferred embodiment the diameter of the shaft 8 is about 40% of the diameter of the active parts of the rotors 2, 4. These features improve the effectiveness of the flux path along the shaft axis.

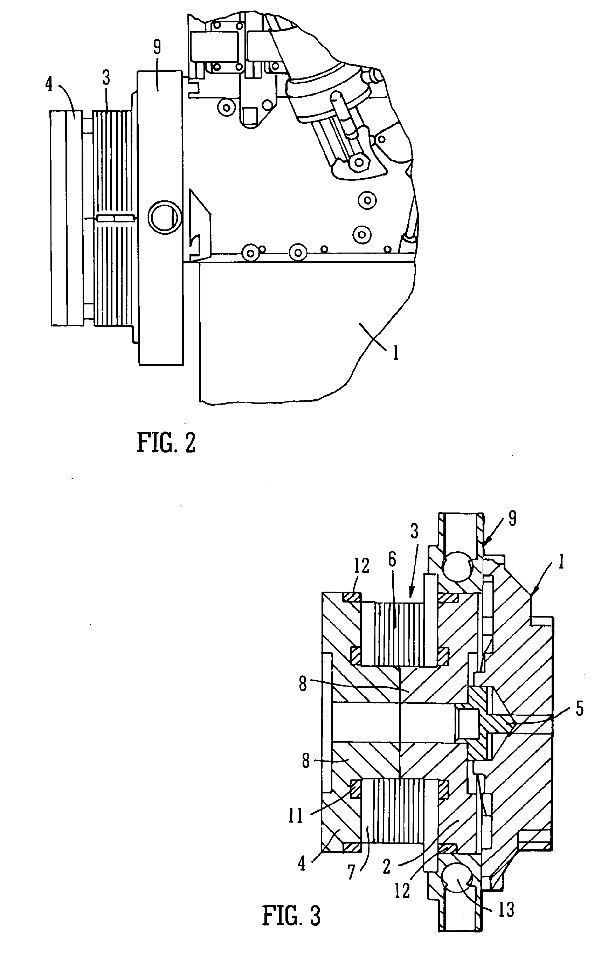

Figures 2 and 3 show a side view and cross-section of the electrical machine when assembled and mounted to the engine 1. As is clear from these Figures, the construction of the device enables it to be mounted close to the engine, with the moving parts at minimal distance from their mounting point on the output shaft 5. This results in a compact engine-generator device.

In Figure 2 the first rotor 2 is beneath the stator casing 9 and cannot be seen. The stator 3 is mounted to the stator casing 9 and protrudes outward from it. The second rotor 4 is on the outer end of the stator. Figure 3 shows the first rotor 2 within the stator casing 9 and connected to the output shaft (crankshaft) 5 of the engine 1. The rotor shafts 8 pass through the centre of the stator 3. The shaft 8 are hollow and this enables easy alignment of the rotor assembly with the output shaft 5 of the engine 1. As shown in Figure 3 a boss of the output shaft 5 aligns with the hollow at the centre of the rotor shaft 8 of the first rotor 2. Bolts along the rotor shafts 8 join the two shafts together and fix to appropriate coupling points on the engine output shaft 5. The holes for the bolts can be seen in Figures 4A to 4C, discussed below. The inner and outer short circuit rings 11, 12 of the rotors 2, 4 can be seen in cross-section. Figure 3 illustrates how the same rotor construction can be used for both rotors 2, 4. This advantageously reduces the number of different parts required for the electrical machine. Figure 3 also shows the internal construction of the stator casing 9, which in this embodiment includes a passage 13 for water cooling. Where the device is used as a generator in a CHP device, this water cooling can be used to extract useful heat from the generator. Heat from the generator can also be collected from the engine via heat conducted along the rotor shafts 8 into the engine via the crankshaft 5.

Figures 4A to 4C show more detail of the construction of the cast body 10 for the two rotors 2, 4, which as mentioned above are advantageously both the same shape. The rotor body has a shaft 8, which protrudes on one side. The casting for the body 10 includes channels for the induction cage, which is cast in copper or aluminium, and is preferably cast directly into the main body casting 10. When assembled, the protruding portion of the shaft 8 of one rotor passes through the ring of stator coils 6 to be joined to the shaft 8 of the other rotor. Holes through the shafts 8 allow bolts to be used to join the two shafts 8, 8 together and join the two rotors 2, 4 to the crankshaft 5. Advantageously, a single set of bolts can be used to join both rotors to the output shaft 5. The rotor casting is made of iron and is formed about rotor laminations.

Figure 5 illustrates features of the induction cages for the rotors 2, 4, which comprise an inner short circuit ring 11, outer short circuit ring 12, and induction bars 14, which are formed by casting copper or aluminium into the main body 10 of the rotors 2, 4. As will be appreciated, the rotor construction is of the squirrel cage type. The casting 10, as shown in Figures 4A to 4C is located about the short circuit rings 11, 12 and induction bars 14. The various parts of the rotor 2 in the right side in Figure 5 are shown assembled, whereas for the other rotor 4 at the left side of Figure 5 the main body casting 10 is shown separated from the induction cage parts 11, 12 ,14, so that they can be seen more clearly.

The coils 6 are also shown schematically in Figure 5, with the coils numbered 1 to 6. They can be connected in conventional fashion with coils 1 and 4, 2 and 5, and 3 and 6 in parallel or serial and in a Y or delta formation.

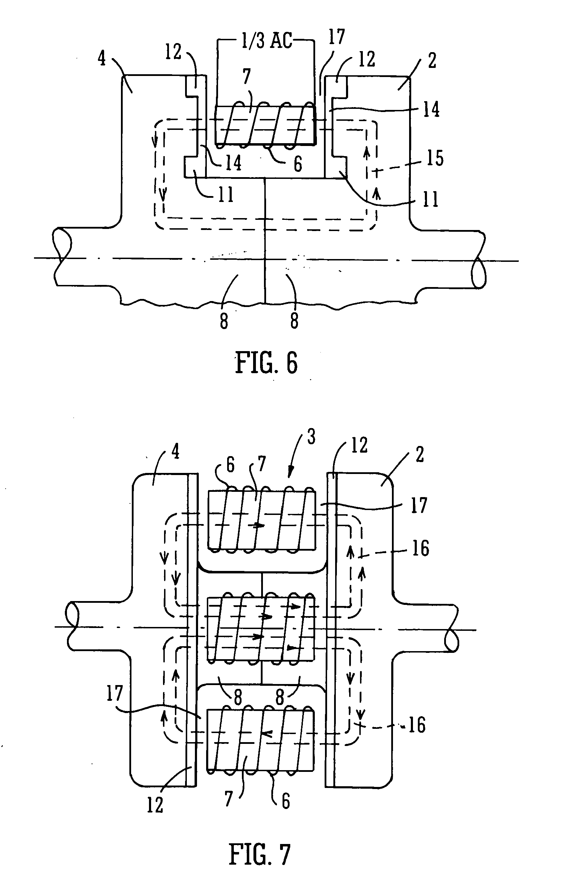

When in use, magnetic flux paths 15, 16 form within the electrical machine as shown in Figure 6 and in Figure 7. The flux paths 15, 16 pass across the air gaps 17 between the rotors 2, 4 and stator 3 in an axial direction. It should be noted that Figure 6 and 7 are schematic in nature and exaggerate the size of the air gaps 17 for illustrative purposes, as well as greatly simplifying the coils 6 and stator bodies 7. In addition the schematic drawings show a simplified arrangement of the shafts 8, which are solid and protrude from the outer sides of the rotors 2, 4 without any particular arrangement for mounting to another device. As explained above it is preferred for the rotor shafts 8 to be hollow and in the preferred embodiment of Figures 1 to 5 the shafts 8 are designed to fit to an engine output shaft 5.

In Figure 6, which shows a cross-section through one half of the device, a first flux path 15 is illustrated using dashed lines to show the lines of flux. This flux path 15 passes from one end of a coil 6, through the rotor 4, along the rotor shafts 8, through the other rotor 2 and back to the opposite end of the coil 6. If the rotor shafts 8 were hollow, as shown in Figure 3, the flux path 15 would pass predominantly along the metal material of the solid part of the shaft 8 at the point closest to the coil 6. The flux path 15 would exist for each stator coil 6. The induction bars 14 and short circuit rings 11, 12 of the rotors 2, 4 can be seen in cross-section. As discussed above the shafts 8 have an increased size compared to conventional shafts. This enables an effective flux path 15 to form along the shafts 8. Also, the shafts 8 are cast integrally with the rotor bodies 10, and this means that the flux path 15 forms easily between the rotor body 10 and shaft 8.

Figure 7 shows a side view of the device with a second flux path 16 illustrated using dashed lines to show the lines of flux This flux path 16 passes out of one end of the coils 6, through one of the rotors to an adjacent coil, passes through this coil to the other rotor and then returns to the starting coil.

The arrangement of the electrical machine described herein leads to efficient conversion of mechanical power to electrical power, and vice versa. Compared to radial flux devices of comparable performance the axial flux machine is smaller, lighter and more efficient. The use of an additional flux path 15 that incorporates flux along the rotor shaft 8 improves the effectiveness of the machine.

As noted above the preferred embodiment shown in the Figures utilises two rotors with induction cages and a single central stator with the coils. However, it is possible to alternatively utilise a single central rotor including the coils, and two stators with induction cages mounted on either side of the rotor. Relative movement of the coil and the induction cages will create the same flux paths no matter which part is used as the moving (rotor) part. This alternative arrangement could be obtained simply by fixing the stator part of the Figures to the driving shaft, and keeping the rotor part stationary, to thereby switch the rotor and stator. However, it will be appreciated that a more refined system could be created by the skilled person based on the disclosure herein and on routine experimentation.

## Claims

1. An asynchronous electrical machine comprising: a first induction element, a second induction element and a coil element, wherein the first and second induction elements and the coil element are mounted along an axis of rotation of the machine and are axially spaced from one another, wherein the machine provides for relative rotational movement between the coil element and the induction elements and wherein the coil element is located on the axis between the two induction elements.

2. An asynchronous electrical machine as claimed in claim 1, wherein the electrical machine is a generator for connection to an output shaft of a prime mover.

3. An asynchronous electrical machine as claimed in claim 1 or 2, wherein the coil element comprises coils entirely contained within the flux path of the electrical machine and wound about an axis parallel to the axis of rotation of the machine.

4. An asynchronous electrical machine as claimed in claim 1, 2 or 3, wherein the first and second induction elements are joined by a shaft or shafts, and wherein the diameter of the shaft or shafts is at least 20% of the diameter of the active parts of the first and second induction elements.

5. An asynchronous electrical machine as claimed in any preceding claim, wherein the electrical machine, in use, comprises a flux path extending out of a coil, radially through a portion of the first induction element to the axis, along the induction element shaft or axle, radially through a portion of the second induction element and returning to the coil.

6. An asynchronous electrical machine as claimed in any preceding claim, wherein the coil element is a stator and the machine comprises a stator casing to support the stator, wherein the electrical machine is a generator for connection to a prime mover such as an engine and the stator casing includes one or more fixing(s) arranged to be coupled with one or more pre-existing mounting point(s) on the engine.

7. An asynchronous electrical machine as claimed in any preceding claim, wherein the electrical machine is a generator for connection to an output shaft of a prime mover and the moving parts of the machine are arranged for cantilevered connection to the output shaft.

8. An asynchronous electrical machine as claimed in any preceding claim, wherein the induction elements are rotors and are cast integrally with a rotor shaft.

9. An engine-generator comprising an asynchronous electrical machine as claimed in any preceding claim.

10. A combined heat and power device including an engine and an electrical machine as claimed in any of claims 1 to 8, wherein the combined heat and power device is arranged such that heat is removed from the electrical machine via conduction of heat from a shaft of the electrical machine into the output shaft of the engine.

11. A method of manufacturing an asynchronous electrical machine, the method comprising: providing a first induction element, a second induction element and a coil element, wherein the first and second induction elements and the coil element are mounted along an axis of rotation of the machine and are axially spaced from one another, wherein the machine provides for relative rotational movement between the coil element and the induction elements and wherein the coil element is located between the two induction elements.

12. A method as claimed in claim 11, comprising providing features of the electrical machine as claimed in any of claims 1 to 8.

13. A method as claimed in claim 11 or 12, wherein the electrical machine is a generator for mounting to an output shaft of a prime mover and the method comprises mounting moving parts of the machine directly to the output shaft.

14. A method as claimed in claim 11, 12 or 13, wherein the two induction elements are joined by a shaft, with the coil element mounted about the shaft between the two induction elements.

15. A method as claimed in any of claims 11 to 14, wherein one or both induction elements have an integrally formed shaft for mounting purposes.
